# EUROPEAN PATENT APPLICATION

(11) **EP 4 369 082 A1**
(43) Date of publication of application: **15.05.2024**
(21) Application number: 22871668.4
(22) Date of filing: 11.08.2022
(51) Int. Cl.: G02F 1/035, G02F 1/03

(54) **ELECTRO-OPTIC MODULATOR AND ELECTRO-OPTIC DEVICE**

(30) Priority: 22.09.2021 CN 202111107287
(71) Applicant: Nanjing Lycore Technologies Co., Ltd., Nanjing, Jiangsu 210000 (CN)
(72) Inventor: LIANG, Hanxiao, Nanjing, Jiangsu 210000 (CN); SONG, Yipin, Nanjing, Jiangsu 210000 (CN); ZHOU, Yingcong, Nanjing, Jiangsu 210000 (CN); WU, Haicang, Nanjing, Jiangsu 210000 (CN); MAO, Wenhao, Nanjing, Jiangsu 210000 (CN); SONG, Shiwei, Nanjing, Jiangsu 210000 (CN); SUN, Weiqi, Nanjing, Jiangsu 210000 (CN); YU, Qingyang, Nanjing, Jiangsu 210000 (CN)
(74) Representative: Nevett, Duncan
(86) International application number: PCT/CN2022/111797
(87) International publication number: WO 2023/045610

(57) **Abstract**

An electro-optic modulator and an electro-optic device are provided. The electro-optic modulator includes: a first optical waveguide, a second optical waveguide, and a traveling wave electrode, where the traveling wave electrode includes a first grounding electrode, a first signal electrode, a second signal electrode, and a second grounding electrode that are spaced apart from each other; and the first optical waveguide and the second optical waveguide are both arranged between the first signal electrode and the second signal electrode. The electro-optic modulator has a plurality of extension sections along a extension direction thereof. The plurality of extension sections include a plurality of straight sections and at least one curved section. Each curved section is provided between two adjacent straight sections. According to one or more embodiments of the present disclosure, the electro-optic modulator uses a curved and folded design, the plurality of straight sections can be stacked together, and therefore, compared with a conventional electro-optic modulator, the size in a length direction can be greatly reduced, thereby reducing the costs of manufacturing the electro-optic modulator.

## Description

### TECHNICAL FIELD

The present disclosure relates to electro-optic modulation technologies, and in particular, to an electro-optic modulator and an electro-optic device.

### BACKGROUND

Electro-optic modulators are modulators made by using the electro-optic effect of some electro-optic crystals, such as lithium niobate (LiNb03) crystals, gallium arsenide (GaAs) crystals, or lithium tantalate (LiTaO3) crystals. When a voltage is applied to electro-optic crystals, a refractive index of the electro-optic crystals will change, thereby implementing modulation of the phase, amplitude, intensity, polarization state, and other characteristics of an optical signal. A common modulator among electro-optic modulators is a Mach-Zehnder modulator. This interferometer-type modulator mainly uses a phase difference between two arms in the modulator to complete signal modulation of coherent enhancement and coherent cancellation.

However, with the increasing and urgent demands for high-speed, large-capacity, and integrated communication technologies, it is desired to minimize the size of integrated devices while ensuring the modulation effect of electro-optic modulators. This places high requirements on electrode design.

### SUMMARY

It will be advantageous to provide a mechanism to alleviate, mitigate or even eliminate one or more of the above-mentioned problems.

According to an aspect of the present disclosure, there is provided an electro-optic modulator, including: a first optical waveguide, a second optical waveguide, and a traveling wave electrode each arranged to extend along an extension direction of the electro-optic modulator, where the traveling wave electrode includes a first grounding electrode, a first signal electrode, a second signal electrode, and a second grounding electrode each extending along the extension direction of the electro-optic modulator and spaced apart from each other; and the first optical waveguide and the second optical waveguide are both arranged between the first signal electrode and the second signal electrode, and are configured such that optical signals transmitted within the first optical waveguide and the second optical waveguide are subjected to voltage modulation between the first signal electrode and the second signal electrode, where the electro-optic modulator has a plurality of extension sections along the extension direction thereof, and the plurality of extension sections include a plurality of straight sections and at least one curved section, where each curved section is provided between two adjacent straight sections.

According to another aspect of the present disclosure, there is provided an electro-optic device, including the electro-optic modulator described above.

According to one or more embodiments of the present disclosure, the electro-optic modulator uses a curved and folded design, the plurality of straight sections can be stacked together, and therefore, compared with a conventional electro-optic modulator, the size in a length direction can be greatly reduced, thereby reducing the costs of manufacturing the electro-optic modulator.

These and other aspects of the present disclosure will be clear from the embodiments described below, and will be clarified with reference to the embodiments described below.

### BRIEF DESCRIPTION OF THE DRAWINGS

More details, features, and advantages of the present disclosure are disclosed in the following description of exemplary embodiments with reference to the accompany drawings, in which:
FIG. 1 is a schematic top view of an electro-optic modulator according to an exemplary embodiment of the present disclosure;
FIG. 2 is a schematic top view of an electro-optic modulator according to another exemplary embodiment of the present disclosure;
FIG. 3 is a schematic top view of a first type of straight section of an electro-optic modulator according to an exemplary embodiment of the present disclosure;
FIG. 4 is a schematic top view of a second type of straight section of an electro-optic modulator according to an exemplary embodiment of the present disclosure;
FIG. 5 is a schematic top view of an electro-optic modulator according to yet another exemplary embodiment of the present disclosure;
FIG. 6 is a schematic top view of an electro-optic modulator according to yet another exemplary embodiment of the present disclosure;
FIG. 7 is a schematic perspective view of a straight section of an electro-optic modulator according to an exemplary embodiment of the present disclosure; and
FIG. 8 is a schematic block diagram of an electro-optic device according to an exemplary embodiment of the present disclosure.

### DETAILED DESCRIPTION OF EMBODIMENTS

In the present disclosure, unless otherwise stated, the terms "first", "second", etc., used to describe various elements are not intended to limit the positional, temporal or importance relationships of these elements, but rather only to distinguish one element from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

Electro-optic modulation related technologies have been widely developed and applied in the fields of optical communications, microwave photonics, laser beam deflection, wavefront modulation, etc. In a Mach-Zehnder modulator in the related art, one signal electrode and two grounding electrodes are used to input signals in the form of 0 (grounding signal), 1 (modulating voltage signal), and 0 (grounding signal), thereby generating two electric fields in opposite directions, i.e., the "GSG"-type electro-optic modulator described hereinafter. The opposite electric field directions are used to implement opposite modulation of two optical path signals located in the two electric fields, thereby generating a phase difference and completing coherent enhancement or coherent cancellation.

However, to achieve a sufficient phase difference, a relatively large modulation voltage and a relatively long transmission distance are required. An existing electro-optic modulator has the disadvantages of large size or low modulation efficiency, making it difficult to meet the requirements of integration and high efficiency currently on the market.

Embodiments of the present disclosure provide an improved electro-optic modulator that may alleviate, mitigate, or even eliminate the above-mentioned disadvantages.

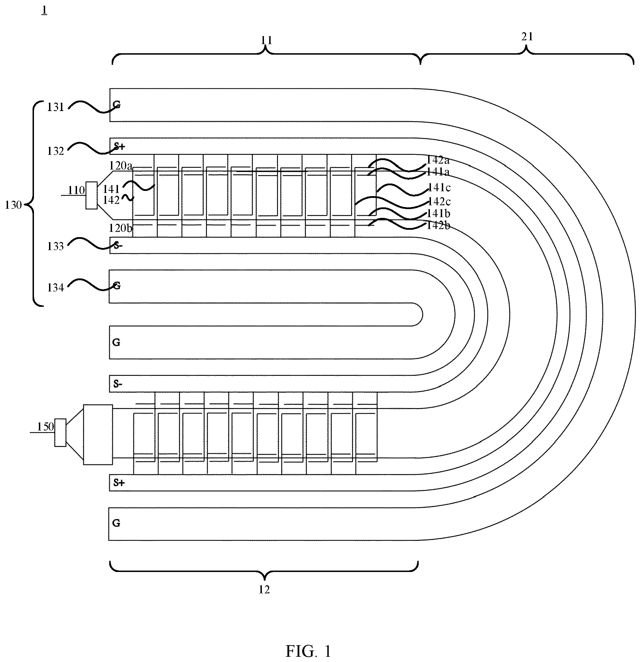

FIG. 1 is a schematic top view of an electro-optic modulator 1 according to an exemplary embodiment. Referring to FIG. 1, the electro-optic modulator 1 may include an optical splitter 110, an optical combiner 150, a first optical waveguide 120a, a second optical waveguide 120b, and a traveling wave electrode 130.

The traveling wave electrode 130 extends along an overall extension direction of the electro-optic modulator 1, and may in one example include a first grounding electrode 131, a first signal electrode 132, a second signal electrode 133, and a second grounding electrode 134 each extending along the extension direction of the electro-optic modulator 1 and spaced apart from each other. The first optical waveguide 120a and the second optical waveguide 120b are both arranged between the first signal electrode 132 and the second signal electrode 133, and are configured such that optical signals transmitted within the first optical waveguide 120a and the second optical waveguide 120b are subjected to voltage modulation between the first signal electrode 132 and the second signal electrode 133. In one example, the optical signals transmitted within the first optical waveguide 120a and the second optical waveguide 120b are modulated by two voltages with the same magnitude but opposite directions, respectively, such that a phase difference is generated between the two optical signals.

In this embodiment, since the first optical waveguide 120a and the second optical waveguide 120b are both arranged between the first signal electrode 132 and the second signal electrode 133, a differential voltage for the two signal electrodes can be applied to the optical signals transmitted within the first optical waveguide 120a and the second optical waveguide 120b, thereby improving efficiency. In one example, signals input to the first signal electrode 132 and the second signal electrode 133 are opposite (1 for one, and -1 for the other). Compared with a conventional GSG-type electro-optic modulator (i.e., there is only one signal electrode arranged between two grounding electrodes, and a signal at the grounding electrodes is 0), the electro-optic modulator in this embodiment allows the phase difference generated by the two optical waveguides between the first signal electrode 132 and the second signal electrode 133 to be nearly doubled due to a differential signal between the two signal electrodes, a magnitude of which is substantially twice that of the signal between the grounding electrodes and the signal electrode in the conventional GSG-type electro-optic modulator. Therefore, the differential electro-optic modulator in this embodiment has a higher modulation efficiency than the conventional GSG-type electro-optic modulator.

Further, the electro-optic modulator 1 described above has a plurality of extension sections along the extension direction thereof, and the plurality of extension sections include: a plurality of straight sections and at least one curved section, where each curved section is provided between two adjacent straight sections. As an example, the electro-optic modulator 1 shown in FIG. 1 includes a first straight section 11, a second straight section 12, and a first curved section 21 located between the first straight section 11 and the second straight section 12.

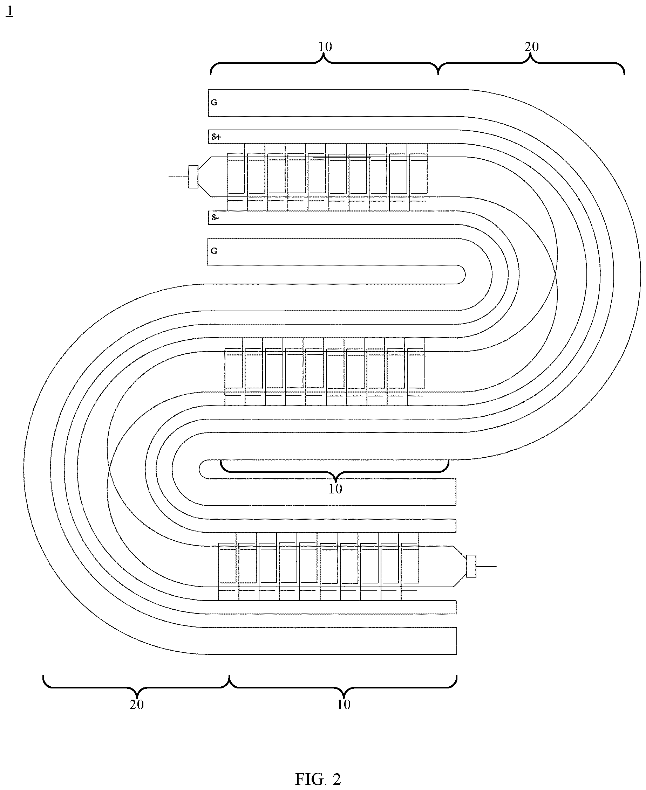

It is understood that in other embodiments of the present disclosure, the plurality of extension sections described above may include more than two straight sections. FIG. 2 is a schematic top view of an electro-optic modulator 1 according to another exemplary embodiment. As shown in FIG. 2, the electro-optic modulator 1 includes three straight sections 10 and two curved sections 20, such that the electro-optic modulator 1 is generally curved and folded in an "S" shape. While in the embodiment described above, the curved section 20 is designed as an arc of 180° so that the plurality of straight sections 10 are parallel to each other, in other embodiments, the curved section 20 may be designed as an arc of another angle such as 90°, 60°, or 45°, that is, the plurality of straight sections 10 may not be parallel to each other. In some embodiments, the curved section 20 may also be curved in a non-arc. For example, it may be bent at a right angle.

According to one or more embodiments of the present disclosure, the electro-optic modulator 1 uses a curved and folded design, the plurality of straight sections can be stacked together, and therefore, compared with a conventional electro-optic modulator, the size in a length direction can be greatly reduced, thereby reducing the costs of manufacturing the electro-optic modulator.

With continued reference to FIG. 1, the electro-optic modulator 1 further includes: a plurality of first electrode extensions 141 connected to the first signal electrode 132 and spaced apart, and a plurality of second electrode extensions 142 connected to the second signal electrode 133 and spaced apart. The plurality of first electrode extensions 141 are all arranged to extend toward the second signal electrode 133, and each of the first electrode extensions 141 includes a first sub-electrode 141a and a second sub-electrode 141b. The plurality of second electrode extensions 142 are all arranged to extend toward the first signal electrode 132, and each of the second electrode extensions 142 includes a third sub-electrode 142a and a fourth sub-electrode 142b.

The plurality of first electrode extensions 141 and the plurality of second electrode extensions 142 may all be arranged along an optical transmission path. In one example, a number of the first electrode extensions 141 is equal to a number of the second electrode extensions 142, and each of the first electrode extensions 141 and a corresponding second electrode extension 142 forms a group. The first sub-electrode 141a of the first electrode extension 141 is arranged opposite the third sub-electrode 142a of the second electrode extension 142, and the first optical waveguide 120a is between the first sub-electrode 141a and the third sub-electrode 142a. The second sub-electrode 141b of the first electrode extension 141 is arranged opposite the fourth sub-electrode 142b of the second electrode extension 142, and the second optical waveguide 120b is between the second sub-electrode 141b and the fourth sub-electrode 142b. In one example, the first sub-electrode 141a, the second sub-electrode 141b, the third sub-electrode 142a, and the fourth sub-electrode 142b described above are all arranged to extend along the same extension direction as the first optical waveguide 120a and the second optical waveguide 120b.

In some embodiments, as shown in FIG. 1, after passing through the optical splitter 110, an optical input signal is divided into a first optical signal and a second optical signal, which are transmitted along optical transmission paths provided by the first optical waveguide 120a and the second optical waveguide 120b, respectively. A voltage is applied to the first signal electrode 132 and the second signal electrode 133, and the first grounding electrode 131 and the second grounding electrode 134 are grounded. The first signal electrode 132 is electrically connected to the first sub-electrode 141a and the second sub-electrode 141b, and the second signal electrode 133 is electrically connected to the third sub-electrode 142a and the fourth sub-electrode 142b, so that each of the sub-electrodes has the same potential as the traveling wave electrode electrically connected thereto. When the first optical signal and the second optical signal pass through a gap of the traveling wave electrode 130, the first sub-electrode 141a and the third sub-electrode 142a can modulate the first optical signal, and the second sub-electrode 141b and the fourth sub-electrode 142b can modulate the second optical signal.

In embodiments of the present disclosure, the sub-electrodes are arranged on two sides of each optical waveguide, and an electrical connection structure of the sub-electrodes is configured such that the sub-electrodes on two sides of each optical waveguide have opposite potentials. For example, the first sub-electrode 141a and the third sub-electrode 142a have potentials of U and -U, respectively. In this case, a potential difference between the sub-electrodes on two sides of each optical waveguide is 2U or -2U. A larger potential difference causes a refractive index of an electro-optic crystal to change more drastically, and accordingly light wave characteristics of the electro-optic crystal change more drastically, so that an ideal phase difference can be reached faster. To achieve the same phase difference as in the prior art (e.g., the GSG-type electro-optic modulator), embodiments of the present disclosure require only a shorter optical signal propagation distance under the same conditions, thereby greatly reducing the size of the device and significantly saving space.

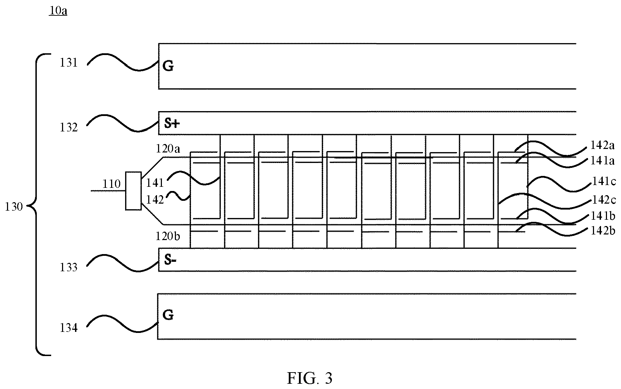

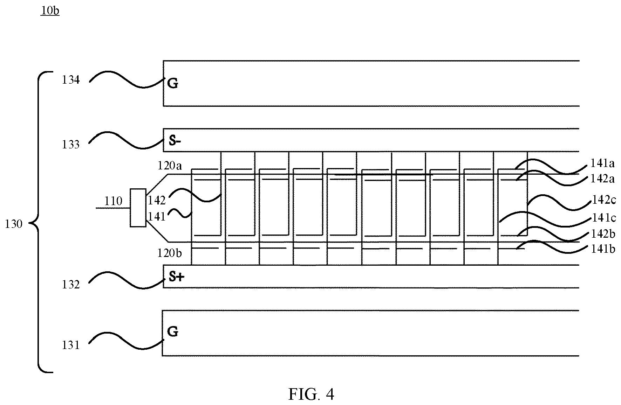

As described above, the electro-optic modulator 1 includes a plurality of straight sections, which can be divided into two types, including a first type of straight section and a second type of straight section. FIG. 3 is a schematic diagram of a first type of straight section 10a according to an embodiment of the present disclosure, and FIG. 4 is a schematic diagram of a second type of straight section 10b according to an embodiment of the present disclosure. For convenience of description, it is defined that: the first optical waveguide 120a has a first side facing the second optical waveguide 120b and a second side away from the second optical waveguide 120b, and the second optical waveguide 120b has a third side facing the first optical waveguide 120a and a fourth side away from the first optical waveguide 120a. As shown in FIG. 3, the first type of straight section 10a is configured such that the first sub-electrode 141a and the second sub-electrode 141b are arranged on the first side of the first optical waveguide 120a and the third side of the second optical waveguide 120b, respectively; and the third sub-electrode 142a and the fourth sub-electrode 142b are arranged on the second side of the first optical waveguide 120a and the fourth side of the second optical waveguide 120b, respectively. As shown in FIG. 4, the second type of straight section 10b is configured such that the first sub-electrode 141a and the second sub-electrode 141b are arranged on the second side of the first optical waveguide 120a and the fourth side of the second optical waveguide 120b, respectively; and the third sub-electrode 142a and the fourth sub-electrode 142b are arranged on the first side of the first optical waveguide 120a and the third side of the second optical waveguide 120b. As can be seen from FIGS. 3 and 4, the first type of straight section 10a differs from the second type of straight section 10b in that positions of the first sub-electrode 141a and the second sub-electrode 141b are exchanged with positions of the third sub-electrode 142a and the fourth sub-electrode 142b, with respect to the first optical waveguide 120a and the second optical waveguide 120b.

It is understood that both the first type of straight section 10a and the second type of straight section 10b can ensure that the sub-electrodes on two sides of each optical waveguide have opposite potentials.

It should be additionally noted that in one example of the embodiments shown in FIGS. 1 and 2, the plurality of first electrode extensions 141 and the plurality of second electrode extensions 142 are provided only in the straight sections 10, with no electrode extension provided in the curved section 20. In other words, the optical signals within the first optical waveguide 120a and the second optical waveguide 120b are modulated only in the straight sections 10.

In some embodiments, as shown in FIG. 1, the plurality of extension sections of the electro-optic modulator 1 include a first straight section 11, a second straight section 12, and a first curved section 21 provided between the first straight section 11 and the second straight section 12. The first optical waveguide 120a and the second optical waveguide 120b are arranged to extend spaced apart in the first curved section 21. That is, the first optical waveguide 120a and the second optical waveguide 120b are in their respective extension paths, without crossing each other. In this case, the first straight section 11 and the second straight section 12 are the same type of straight sections. As shown in FIG. 1, the first straight section 11 and the second straight section 12 are both the first type of straight sections 10a as described above.

In the electro-optic modulator 1 shown in FIG. 1, the first optical waveguide 120a and the second optical waveguide 120b do not exchange positions with each other in the curved section, or in other words, the positions of the first optical waveguide 120a and the second optical waveguide 120b with respect to the first signal electrode 132 and the second signal electrode 133 remain unchanged. Therefore, the first straight section 11 and the second straight section 12 need to be the same type of straight sections, so as to ensure that directions of voltage signals respectively applied to the first optical waveguide 120a and the second optical waveguide 120b remain unchanged. It is understood that while in the embodiment shown in FIG. 1, the first straight section 11 and the second straight section 12 are both the first type of straight sections 10a, in other embodiments, the first straight section 11 and the second straight section 12 may be both the second type of straight sections 10b.

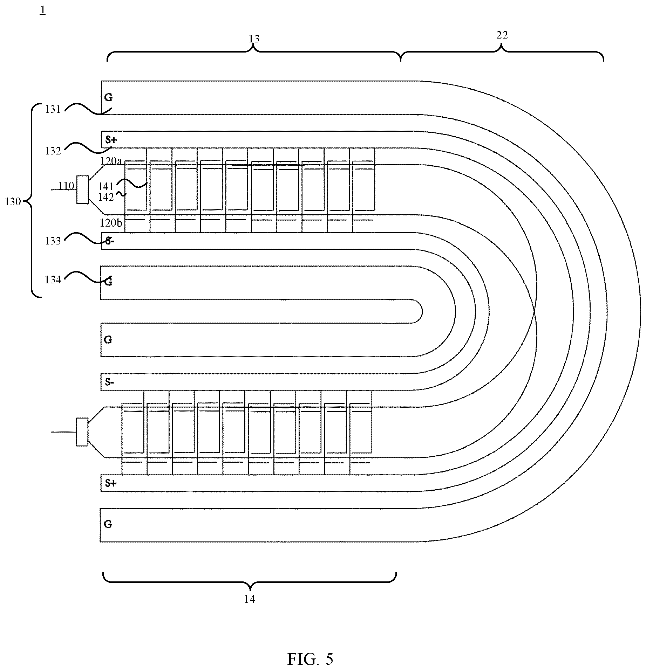

FIG. 5 is a schematic top view of an electro-optic modulator 1 according to another embodiment of the present disclosure. As shown in FIG. 5, a plurality of extension sections of the electro-optic modulator 1 include a third straight section 13, a fourth straight section 14, and a second curved section 22 provided between the third straight section 13 and the fourth straight section 14. As shown in FIG. 5, the first optical waveguide 120a and the second optical waveguide 120b are arranged crosswise in the second curved section 22. In this case, the third straight section 13 and the fourth straight section 14 are different types of straight sections. As shown in FIG. 5, the third straight section 13 is the first type of straight section 10a, and the fourth straight section 14 is the second type of straight section 10b.

In the electro-optic modulator 1 shown in FIG. 5, the first optical waveguide 120a and the second optical waveguide 120b exchange positions with each other in the curved section, or in other words, the positions of the first optical waveguide 120a and the second optical waveguide 120b with respect to the first signal electrode 132 and the second signal electrode 133 change. In one example, the first optical waveguide 120a originally close to the first signal electrode 132 becomes close to the second signal electrode 133, and the second optical waveguide 120b originally close to the second signal electrode 133 becomes close to the first signal electrode 132. Therefore, the third straight section 13 and the fourth straight section 14 need to be different types of straight sections, so as to ensure that directions of voltage signals respectively applied to the first optical waveguide 120a and the second optical waveguide 120b remain unchanged. It is understood that while in the embodiment shown in FIG. 5, the third straight section 13 and the fourth straight section 14 are the first and second types of straight sections 10a, 10b, respectively, in other embodiments, the third straight section 13 and the fourth straight section 14 may be the second and first types of straight sections 10b, 10a, respectively.

While in the embodiments shown in FIGS. 1 and 5 described above, only the electro-optic modulator 1 including three extension sections is shown, it is understood that in other embodiments, the electro-optic modulator 1 may include more than three extension sections, e.g., 5, 7, or 9 extension sections. The plurality of extension sections of the electro-optic modulator 1 may all be arranged as in the example shown in FIG. 1, that is, all adjacent straight sections are the same type of straight sections, and the first optical waveguide 120a and the second optical waveguide 120b are arranged to extend spaced apart in the curved section. Alternatively, the plurality of extension sections may all be arranged as in the example shown in FIG. 5, that is, all adjacent straight sections are different types of straight sections, and the first optical waveguide 120a and the second optical waveguide 120b are arranged crosswise in the curved section. Still alternatively, the plurality of extension sections may be a mixture of the examples shown in FIGS. 1 and 5, that is, some adjacent straight sections are the same type of straight sections, and some are different types of straight sections. In short, the implementation of the present disclosure is not limited by the number, type, and distribution of extension sections.

With continued reference to FIG. 1, the first electrode extension 141 further includes a first extension arm 141c, the second electrode extension 142 further includes a second extension arm 142c, and in one example, the first extension arm 141c and the second extension arm 142c are both arranged perpendicular to the traveling wave electrode 130. The first extension arm 141c is configured to electrically connect the first signal electrode 132 to the first sub-electrode 141a and the second sub-electrode 141b. The second extension arm 142c is configured to electrically connect the second signal electrode 133 to the third sub-electrode 142a and the fourth sub-electrode 142b. In some embodiments, the first extension arm 141c may be integrally formed with the first signal electrode 132, the first sub-electrode 141a, and the second sub-electrode 141b, and the second extension arm 142c may be integrally formed with the second signal electrode 133, the third sub-electrode 142a, and the fourth sub-electrode 142b.

The arrangement mentioned above may stabilize the electrical connection between each signal electrode and a sub-electrode thereof, pattern the device, and facilitate packaging integration.

For convenience of description, the following is exemplified with the extension arm as an electrical connection method between the traveling wave electrode and each sub-electrode. Certainly, the electrical connection method between the traveling wave electrode 130 and each sub-electrode is not limited to this, and other methods may be used, as long as an electrical signal can be transmitted from the traveling wave electrode 130 to a corresponding sub-electrode.

While in the embodiments described above, the connection of the extension arm and the sub-electrode is L-shaped, that is, the sub-electrodes extend from only one side of the corresponding extension arm, it is understood that the connection of the extension arm and the sub-electrode may also be T-shaped, that is, the sub-electrodes extend from two sides of the corresponding extension arm, or another feasible shape may be used. Certainly, the shapes shown in the embodiments of the present disclosure are not limiting, and other shapes may be used based on actual needs to achieve an appropriate speed matching.

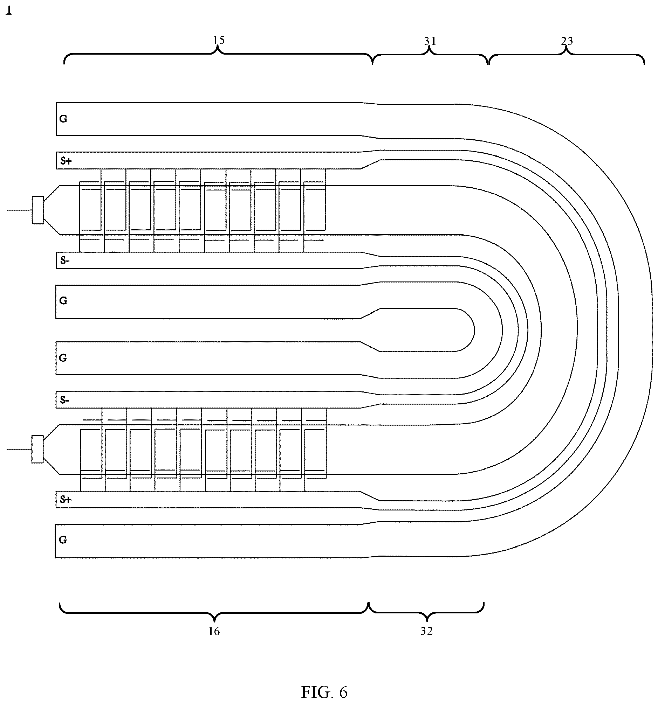

FIG. 6 is a schematic top view of an electro-optic modulator 1 according to yet another embodiment of the present disclosure. As shown in FIG. 6, a plurality of extension sections of the electro-optic modulator 1 include: a fifth straight section 15, a first transitional section 31, a third curved section 23, a second transitional section 32, and a sixth straight section 16 that are connected sequentially. Different from the electro-optic modulator 1 shown in FIG. 1, a transitional section is additionally provided between the immediately adjacent straight section and curved section, and the transitional section is configured such that a shape of each part in the straight section gradually change to a shape in the curved section.

In some embodiments, a width of at least one of the first signal electrode 132, the second signal electrode 133, the first grounding electrode 131, and the second grounding electrode 134 in the straight section is different from a width of a corresponding electrode in the curved section. As shown in FIG. 6, widths of the first grounding electrode 131, the first signal electrode 132, the second signal electrode 133, and the second grounding electrode 134 in the third curved section 23 are respectively less than widths of the first grounding electrode 131, the first signal electrode 132, the second signal electrode 133, and the second grounding electrode 134 in the fifth straight section 15.

Since a total extension length of inner electrodes (e.g., the second grounding electrode 134 and the second signal electrode 133) is different from that of outer electrodes (e.g., the first grounding electrode 131 and the first signal electrode 132), it may be necessary to design each of the electrodes (e.g., set an electrode width of each electrode) so that transmission times of the electrical signal on the inner and outer electrodes match as much as possible. Therefore, the width of each of the electrodes in the straight section and the curved section may be set to different specific values, such that the transmission times of the electrical signal on the inner and outer electrodes match as much as possible.

As described above, the width of each of the electrodes in the straight section is different from the width of the corresponding electrode in the curved section. Therefore, in the embodiment shown in FIG. 6, the transitional section is additionally provided between the straight section and the curved section, such that in the transitional section, the width of each of the electrodes in the straight section gradually changes to the width of the corresponding electrode in the curved section, thereby avoiding an abrupt change of the width of the electrode and preventing unstable electrical signal transmission.

With continued reference to FIG. 1, in some embodiments, the electro-optic modulator 1 may further include an optical splitter 110 and an optical combiner 150. The optical splitter 110 is configured to split an optical input signal into optical signals transmitted within the first optical waveguide 120a and the second optical waveguide 120b. The modulated first optical signal and second optical signal are combined into an optical combined signal after passing through the optical combiner 150. The optical combined signal may be directly output as an optical output signal, or may be divided into two or more optical output signals and then output.

In some embodiments, the electro-optic modulator 1 further includes a protective layer configured to cover at least one component. For example, the traveling wave electrode 130, the first electrode extension 141, and the second electrode extension 142 are covered with the protective layer, which may slow down natural oxidation or accidental surface damage of the electrodes, and prolong the service life of the element.

In some embodiments, the first optical waveguide 120a and the second optical waveguide 120b are lithium niobate optical waveguides. Lithium niobate crystals have a smooth surface and are an optical material with excellent electro-optic and acousto-optic effects. High-quality optical waveguides prepared using lithium niobate crystals can support an ultra-low transmission loss, and have many excellent characteristics such as mature technology, low cost, and mass production.

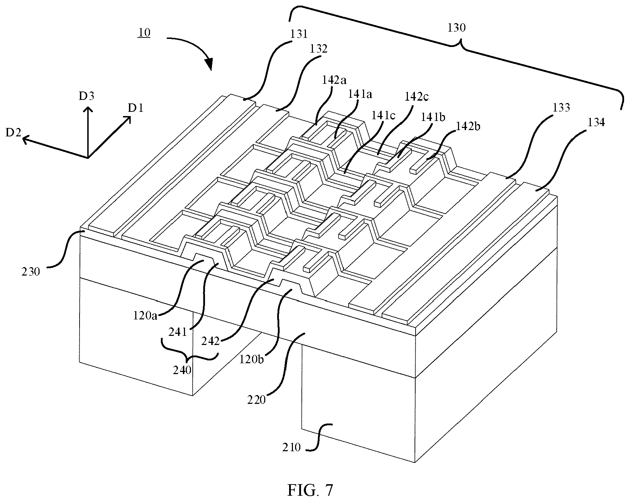

FIG. 7 is a schematic perspective view of a straight section of an electro-optic modulator 1 according to an exemplary embodiment. As shown in FIG. 7, the electro-optic modulator 1 may include a first optical waveguide 120a, a second optical waveguide 120b, a traveling wave electrode 130, a first electrode extension 141, and a second electrode extension 142.

As shown in FIG. 7, the electro-optic modulator 1 may further include a substrate 210, an isolating layer 220 located on the substrate, a thin film layer 230 configured to form the first optical waveguide 120a and the second optical waveguide 120b, and a covering layer 240 located on the first optical waveguide 120a and the second optical waveguide 120b. The covering layer 240 includes a first covering layer 241 located on the first optical waveguide 120a and a second covering layer 242 located on the second optical waveguide 120b.

With continued reference to FIG. 7, in some embodiments, the traveling wave electrode 130 may be located on the thin film layer 230, and the first electrode extension 141 and the second electrode extension 142 may be located on the covering layer 240. This structural arrangement results in a smaller distance between sub-electrodes on two sides of the same optical waveguide, and a larger electric field strength obtained under the same conditions, thereby improving the electro-optic conversion efficiency.

In some embodiments, the first electrode extension 141 and the second electrode extension 142 both extend to upper surfaces of the first covering layer 241 and the second covering layer 242. The first sub-electrode 141a and the third sub-electrode 142a are arranged on the upper surface of the first covering layer 241; and the second sub-electrode 141b and the fourth sub-electrode 142b are arranged on the upper surface of the second covering layer 242. In one example, in this embodiment, the first covering layer 241 and the second covering layer 242 may be two structures extending along the direction of the optical waveguide and protruding upward (i.e., protruding in a D3 direction shown in FIG. 7). In one example, sections of the protrusions are trapezoidal. For the first covering layer 241, for example, the first optical waveguide 120a is arranged at the center below the first covering layer 241, and the first sub-electrode 141a and the third sub-electrode 142a are arranged on the upper surface of the trapezoidal body of the first covering layer 241 and aligned with each other. Accordingly, it is understood that the first electrode extension 141 passes over the first optical waveguide 120a via the first covering layer 241, thereby preventing the first extension arm 141c of the first electrode extension 141 from interfering with the first optical waveguide 120a.

In the embodiment shown in FIG. 7, the traveling wave electrode 130, the first electrode extension 141, and the second electrode extension 142 may be located on the thin film layer 230.

In some embodiments, at least part of the traveling wave electrode 130 and at least part of the first electrode extension 141 and the second electrode extension 142 may be located in the thin film layer 230. While in the embodiment shown in FIG. 7, the traveling wave electrode 130, the first electrode extension 141, and the second electrode extension 142 are located on the thin film layer 230, these elements may be arranged in the thin film layer 230 in other embodiments.

In some embodiments, the traveling wave electrode 130, the first electrode extension 141, and the second electrode extension 142 may also be located on or in the isolating layer 220.

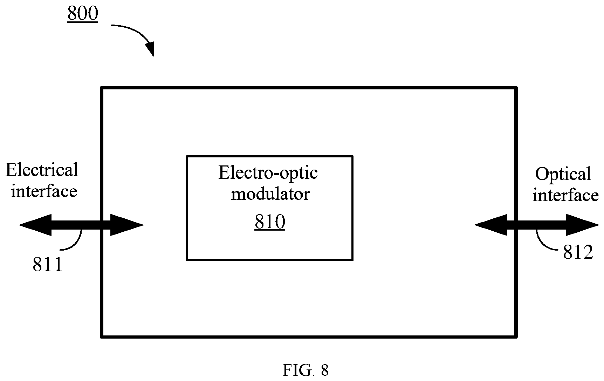

FIG. 8 is a simplified block diagram of an electro-optic device 800 according to an exemplary embodiment of the present disclosure. In an example, the electro-optic device 800 may include an electro-optic modulator 810, an electrical interface 811 coupled to the electro-optic modulator 810, and an optical interface 812 coupled to the electro-optic modulator 810. The electro-optic modulator 810 may be constructed according to any one of the embodiments described above.

Although the embodiments or examples of the present disclosure have been described with reference to the drawings, it should be understood that the methods, systems and devices described above are merely exemplary embodiments or examples, and the scope of the present disclosure is not limited by the embodiments or examples, and is only defined by the scope of the granted claims and the equivalents thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. An electro-optic modulator (1), comprising:
a first optical waveguide (120a), a second optical waveguide (120b), and a traveling wave electrode (130) each arranged to extend along an extension direction of the electro-optic modulator (1), wherein
the traveling wave electrode (130) comprises a first grounding electrode (131), a first signal electrode (132), a second signal electrode (133), and a second grounding electrode (134) that are spaced apart from each other; and
the first optical waveguide (120a) and the second optical waveguide (120b) are both arranged between the first signal electrode (132) and the second signal electrode (133), and are configured such that optical signals transmitted within the first optical waveguide (120a) and the second optical waveguide (120b) are subjected to voltage modulation between the first signal electrode (132) and the second signal electrode (133), wherein
the electro-optic modulator (1) has a plurality of extension sections along the extension direction thereof, and the plurality of extension sections comprise:
a plurality of straight sections and at least one curved section, wherein each curved section is provided between two adjacent straight sections.

2. The electro-optic modulator (1) according to claim 1, further comprising:
a plurality of first electrode extensions (141) connected to the first signal electrode (132) and spaced apart, wherein the plurality of first electrode extensions (141) are all arranged to extend toward the second signal electrode (133), and each of the first electrode extensions (141) comprises a first sub-electrode (141a) and a second sub-electrode (141b); and
a plurality of second electrode extensions (142) connected to the second signal electrode (133) and spaced apart, wherein the plurality of second electrode extensions (142) are all arranged to extend toward the first signal electrode (132), and each of the second electrode extensions (142) comprises a third sub-electrode (142a) and a fourth sub-electrode (142b), wherein
the first sub-electrode (141a) and the third sub-electrode (142a) are arranged on two sides of the first optical waveguide (120a), respectively; and
the second sub-electrode (141b) and the fourth sub-electrode (142b) are arranged on two sides of the second optical waveguide (120b), respectively.

3. The electro-optic modulator (1) according to claim 2, wherein the first optical waveguide (120a) has a first side facing the second optical waveguide (120b) and a second side away from the second optical waveguide (120b), and the second optical waveguide (120b) has a third side facing the first optical waveguide (120a) and a fourth side away from the first optical waveguide (120a), wherein
the plurality of straight sections comprise a first type of straight section (10a) and/or a second type of straight section (10b),
the first type of straight section (10a) is configured such that the first sub-electrode (141a) and the second sub-electrode (141b) are arranged on the first side of the first optical waveguide (120a) and the third side of the second optical waveguide (120b), respectively; and the third sub-electrode (142a) and the fourth sub-electrode (142b) are arranged on the second side of the first optical waveguide (120a) and the fourth side of the second optical waveguide (120b), and
the second type of straight section (10b) is configured such that the first sub-electrode (141a) and the second sub-electrode (141b) are arranged on the second side of the first optical waveguide (120a) and the fourth side of the second optical waveguide (120b), respectively; and the third sub-electrode (142a) and the fourth sub-electrode (142b) are arranged on the first side of the first optical waveguide (120a) and the third side of the second optical waveguide (120b).

4. The electro-optic modulator (1) according to claim 2, wherein
each of the first electrode extensions (141) further comprises:
a first extension arm(141c) configured to connect the first sub-electrode (141a) and the second sub-electrode (141b) to the first signal electrode (132); and
each of the second electrode extensions (142) further comprises:
a second extension arm (142c) configured to connect the third sub-electrode (142a) and the fourth sub-electrode (142b) to the second signal electrode (133).

5. The electro-optic modulator (1) according to claim 2, wherein a number of the first electrode extensions (141) is equal to a number of the second electrode extensions (142), wherein
the first sub-electrode (141a) of each of the first electrode extensions (141) is arranged opposite the third sub-electrode (142a) of the corresponding second electrode extension (142); and
the second sub-electrode (141b) of each of the first electrode extensions (141) is arranged opposite the fourth sub-electrode (142b) of the corresponding second electrode extension (142).

6. The electro-optic modulator (1) according to claim 3, wherein the plurality of extension sections comprise a first straight section (11), a second straight section (12), and a first curved section (21) provided between the first straight section (11) and the second straight section (12), wherein
the first optical waveguide (120a) and the second optical waveguide (120b) are arranged to extend spaced apart in the first curved section (21), and
the first straight section (11) and the second straight section (12) are the same type of straight sections.

7. The electro-optic modulator (1) according to claim 3, wherein the plurality of extension sections comprise a third straight section (13), a fourth straight section (14), and a second curved section (22) provided between the third straight section (13) and the fourth straight section (14), wherein
the first optical waveguide (120a) and the second optical waveguide (120b) are arranged crosswise in the second curved section (22), and
the third straight section (13) and the fourth straight section (14) are different types of straight sections.

8. The electro-optic modulator (1) according to claim 2, wherein
a width of at least one of the first signal electrode (132), the second signal electrode (133), the first grounding electrode (131), and the second grounding electrode (134) in the straight section is different from a width of a corresponding electrode in the curved section.

9. The electro-optic modulator (1) according to claim 8, wherein the plurality of extension sections further comprise:
a plurality of transitional sections, each configured to connect the straight section and the curved section immediately adjacent to the straight section, wherein
in each of the transitional sections, a width of each of the first signal electrode (132), the second signal electrode (133), the first grounding electrode (131), and the second grounding electrode (134) gradually changes from a width of the corresponding electrode in the straight section to a width of the corresponding electrode in the curved section along a direction from the straight section to the curved section.

10. The electro-optic modulator (1) according to any one of claims 2 to 9, further comprising:
a substrate (210);
an isolating layer (220) located on the substrate (210);
a thin film layer (230) configured to form the first optical waveguide (120a) and the second optical waveguide (120b);
a first covering layer (241) located on the first optical waveguide (120a); and
a second covering layer (242) located on the second optical waveguide (120b).

11. The electro-optic modulator (1) according to claim 10, wherein
the first electrode extensions (141) and the second electrode extensions (142) both extend to upper surfaces of the first covering layer (241) and the second covering layer (242).

12. The electro-optic modulator (1) according to claim 11, wherein
the first sub-electrode (141a) and the third sub-electrode (142a) are arranged on the upper surface of the first covering layer (241); and
the second sub-electrode (141b) and the fourth sub-electrode (142b) are arranged on the upper surface of the second covering layer (242).

13. The electro-optic modulator (1) according to any one of claims 2 to 9, further comprising:
an optical splitter (110) configured to split an optical input signal into optical signals transmitted within the first optical waveguide (120a) and the second optical waveguide (120b); and
an optical combiner (150) configured to recombine the optical signals transmitted within the first optical waveguide (120a) and the second optical waveguide (120b) into an optical output signal.

14. An electro-optic device (800), comprising the electro-optic modulator (1) according to any one of claims 1 to 13.
